# EUROPEAN PATENT SPECIFICATION

(11) **EP 2 829 811 B1**
(45) Date of publication and mention of the grant of the patent: **30.05.2018**
(21) Application number: 13177577.7
(22) Date of filing: 23.07.2013
(51) Int. Cl.: F24D 3/10, B01D 21/00, B03C 1/30, F24D 19/00, F16L 55/24, F16K 27/06, B03C 1/033, B03C 1/28

(54) **VALVE UNIT FOR THERMAL PLANTS**
VENTIL FÜR HEIZUNGSANLAGE
SOUPAPE POUR SYSTÈMES DES CHAUFFAGE

(43) Date of publication of application: 28.01.2015
(73) Proprietor: Caleffi S.p.A., 28010 Fontaneto d'Agogna, Novara (IT)
(72) Inventor: Caleffi, Marco, 28010 Fontaneto d'Agogna (IT)
(74) Representative: Siniscalco, Fabio

(56) References cited:
- EP-A2- 2 524 730
- WO-A1-2004/106245
- WO-A1-2013/041245
- AT-B- 397 297
- DE-A1- 19 717 869
- DE-A1-102008 045 398
- GB-A- 2 491 361
- US-A- 1 822 006
- US-A- 2 884 089
- US-A1- 2008 314 466

## Description

### BACKGROUND OF THE INVENTION

The present invention relates to a valve unit intended to be applied to thermal plants for regulating the internal temperature of environments.

### STATE OF THE ART

As is known, the thermal plants for heating rooms comprise a boiler that generates heat, a pipe circuit for distributing the heat in which a thermal fluid flows that receives heat from the boiler, and a series of apparatuses, such as radiators, convectors and others that are intended for releasing heat into the room served by the plant. Such plants are then fitted with various components such as valves, regulators, thermostats, probes and others.

Normally, the thermal fluid is water, which is possibly treated and additivated, coming from a mains water supply that is connected to the boiler. The water is heated by the boiler and is circulated by a pump in the heat distribution circuit to then exchange heat with the rooms in the path inside the heat releasing apparatuses.

The problem with such plants is that in the initial step of loading the water into the closed-circuit plant and in the step of normal operation of the path the presence of impurities and dirt coming from the mains water supply or from the piping of the plant may circulate along the pipe circuit and clog the various components of the plant, compromising also gravely the operation thereof.

### OBJECTS OF THE INVENTION

The object of the present invention is to propose a valve unit for thermal plants that is able to resolve the above problem.

EP2524730A2 discloses an apparatus and method of removing magnetic particles from a fluid flow including a housing having an inlet and an outlet for connection to a fluid circuit; a magnetic dirt separator and a filter are positioned in the housing.

### SHORT DESCRIPTION OF THE INVENTION

This object is achieved by a valve unit for thermal plants according to claim 1.

### SHORT DESCRIPTION OF THE DRAWINGS

In order to understand the invention better, a description of an embodiment thereof is given below by way of non-limiting example, illustrated in the attached drawings, in which:

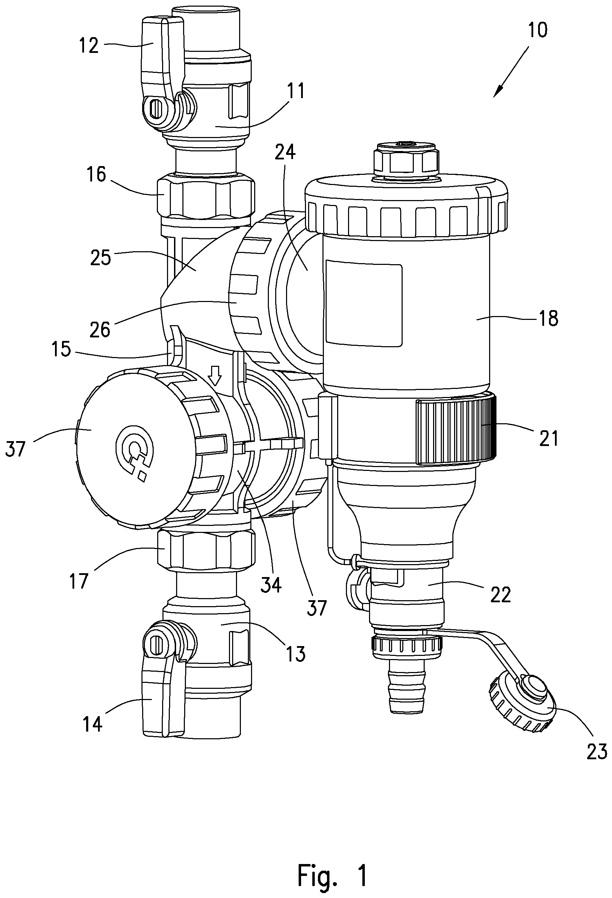

fig.1 is a perspective view of a valve unit for thermal plants according to the invention;
fig.2 is a longitudinal section view of the valve unit of fig.1;
fig.3 is a section of the valve unit in fig.1 according to the line III-III of fig.2;
fig.4 is an exploded view of the valve unit of fig.1;
fig.5 is another exploded view of the valve unit of fig.1;
fig.6 shows a perspective view of a detail of the valve unit of fig.1;
fig.7 is an exploded perspective view of the detail of fig.6;
figs 8,9,10 show a perspective view of different mounting positions of the valve unit of fig.1;
fig. 11 shows the valve unit in fig. 1 as an accessory.

### DETAILED DESCRIPTION OF THE INVENTION

The illustrated valve unit, generally indicated by 10, is intended for being fitted to thermal plants, particularly but not exclusively in heating plants upstream or downstream of the boiler.

The valve unit 10 comprises an opening/closing inlet ball valve 11, provided with a lever 12 for driving the valve ball.

The valve unit 10 further comprises an opening/closing outlet ball valve 13, provided with a lever 14 for driving the valve ball.

Between the ball valves 11 and 13 there is a substantially T-shaped pipe union 15 that is connected to these valves at the ends of the wings of the T by means of respectively threaded nuts 16 and 17.

To the end of the stem of the T of the pipe union 15 a magnetic dirt separator 18 of known type is connected whereas along the wings of the T inside the pipe union 15 a mechanical filtering device is provided.

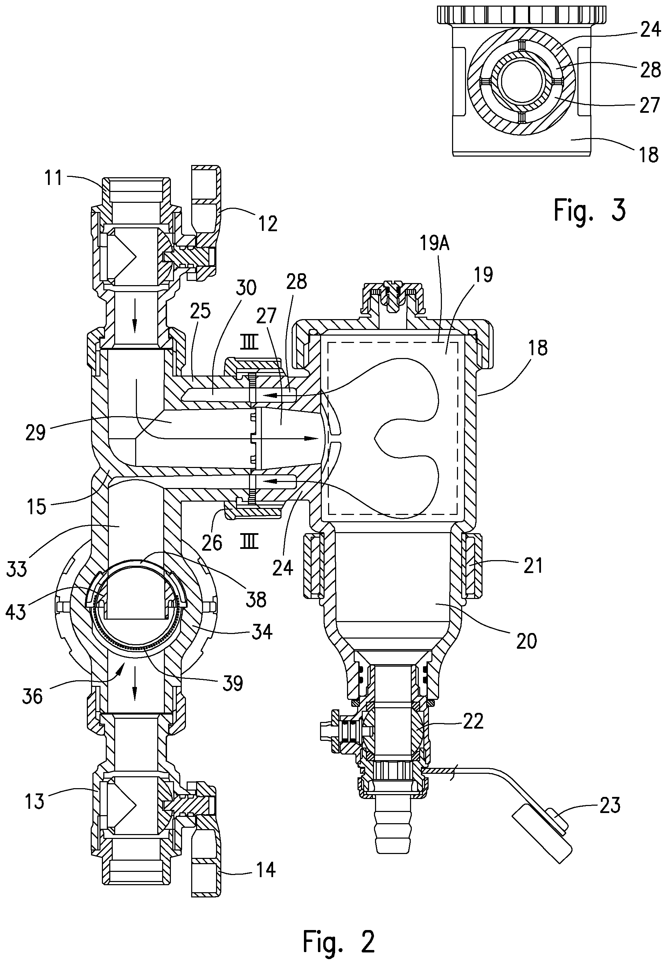

With reference to fig.2, the magnetic dirt separator comprises an upper chamber 19 in which an element 19A is housed with reticular collision surfaces, indicated schematically as a dashed line, and a lower decanting chamber 20; outside the decanting chamber 20 a removable magnetic ring 21 is fitted. Below the decanting chamber there is provided a loading/unloading tap 22 with a closing cap 23.

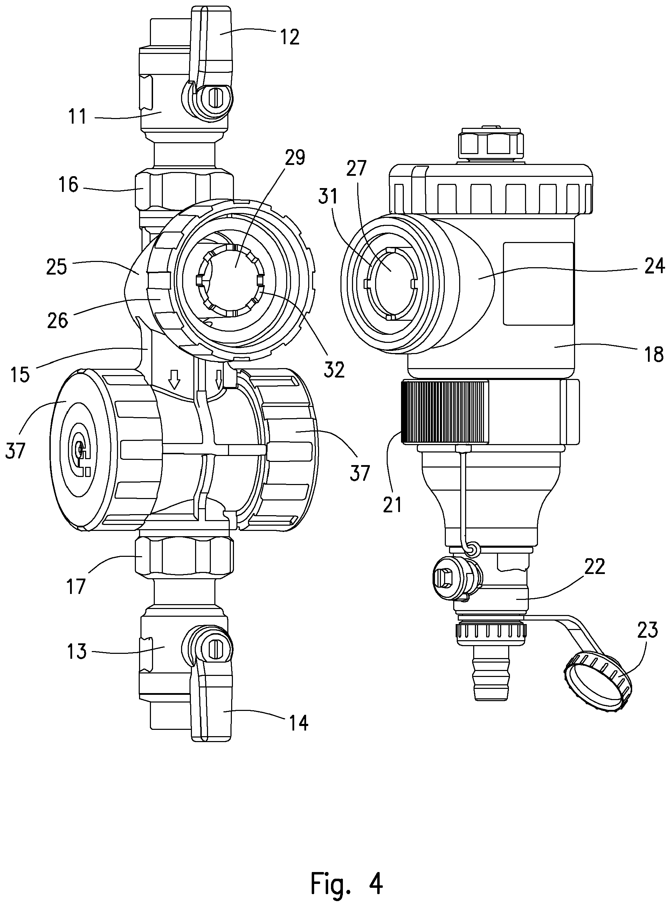

With reference to figs 2,3, the dirt separator 18 is provided with an inlet/outlet mouth 24 connected to a portion 25 of the pipe union 15 by a threaded fixing ring nut 26. The mouth 24 of the dirt separator 18 has internally a portion of cylindrical conduit 27 and an annular conduit portion 28 that is coaxial to the conduit 27 and separated therefrom. Equally, the portion 25 of the pipe union 15 has internally a corresponding portion of cylindrical conduit 29 and a corresponding annular conduit portion 30 that is coaxial to the conduit 29 and is separated therefrom. Substantially, the conduit portions 27 and 29 form a single continuous cylindrical conduit, just as the conduit portions 28 and 30 form a single annular coaxial conduit outside the cylindrical conduit. As is clearly visible in fig.4, the conduit portion 27 and the conduit portion 29 have respective toothed edges 31 and 32 that couple with one another.

With reference to fig.2, the continuous cylindrical conduit formed by the portions 27,29 is in communication with the inlet valve 11 on the one side and on the other side with the inlet part of the dirt separator 18, whilst the annular continuous conduit formed by the portions 28,30 is in communication with the outlet part of the dirt separator 18 on the one side and on the other side with a cylindrical conduit 33 of the pipe union 15 that is in turn in communication with the outlet valve 13.

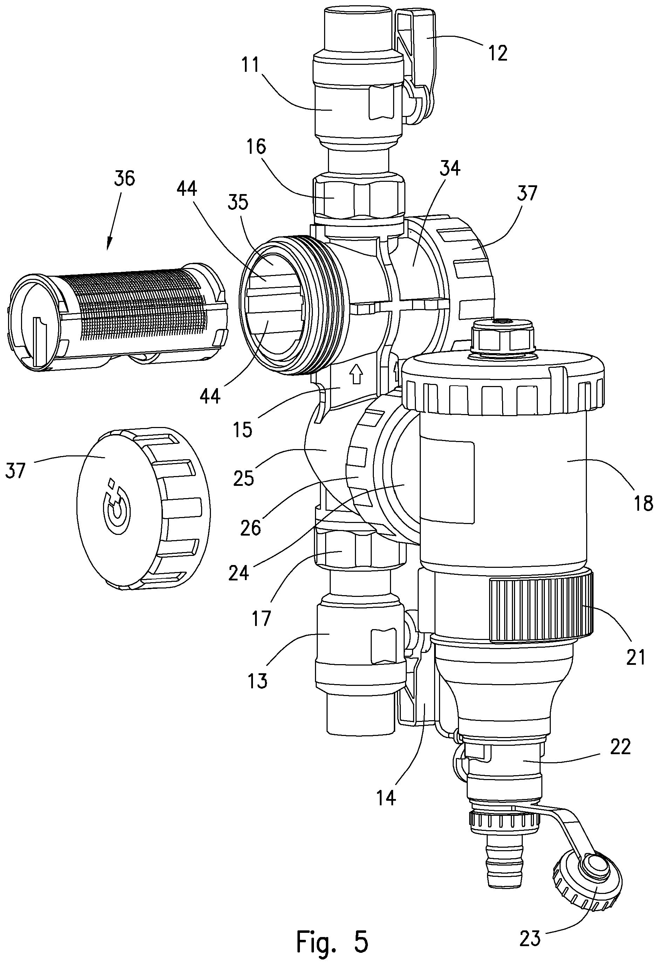

With reference to figs 2,5, along the portion del pipe union 15 in which the conduit 33 runs a transverse cylindrical sleeve 34 is formed that receives in a cylindrical seat 35 thereof the mechanical filtering device, indicated as 36. The sleeve 34 is closed at both ends by screw caps 37.

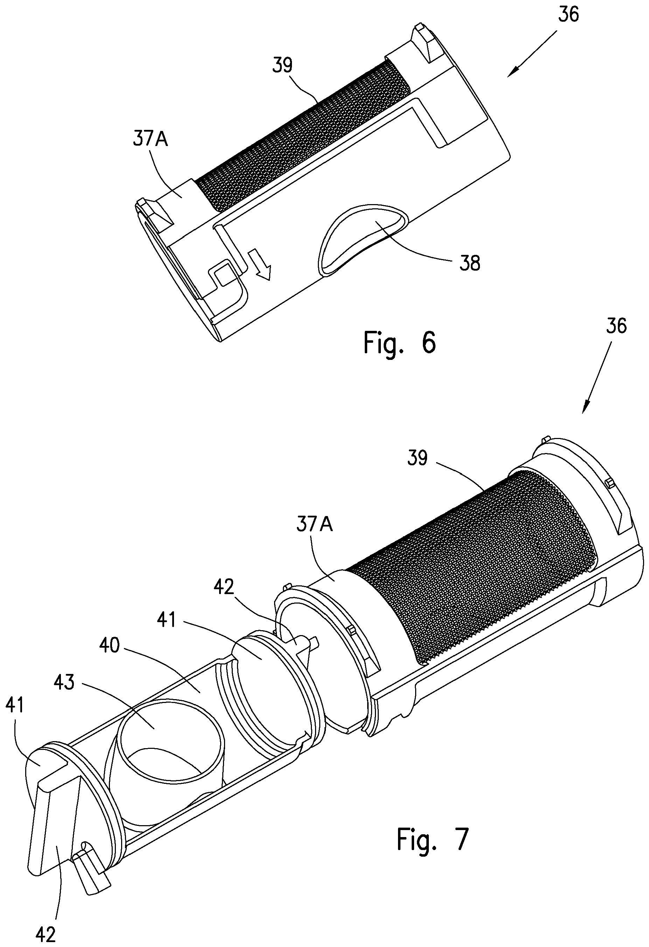

The mechanical filtering device 36 is illustrated in detail in figs 6,7. The device 36 consists, as can be seen in fig.7, of two elements inserted into one another. In particular, a hollow cylinder 37A is provided on the cylindrical wall of which a through inlet hole 38 is obtained; on the side opposite the hole 38 on the cylindrical wall a semicylindrical window is obtained that is enclosed by a filtering mesh 39 of the same shape. Into the cylinder 37A a semicylindrical tank 40 is inserted and locked in position by a bayonet fitting and is closed on the sides by two circular shoulders 41; on each shoulder 41 a protruding diametric fin 42 for grasping and moving the tank 40 is provided; from the centre of the tank 40 a through conduit portion 43 rises that is arranged at the through hole 38 of the cylinder 37A.

With reference to fig.5, the seat 35 of the sleeve 34 has guide elements 44 for inserting the filtering device 36 into the seat correctly. When the filtering device 36 is fitted in the sleeve 34, as illustrated in fig.2, the hole 38 faces and is aligned on the conduit 33, whilst the filtering mesh 39 faces and is aligned on the outlet valve 13.

The operation of the valve unit 10 disclosed is as follows, with reference to fig.2.

As indicated by the arrows, the incoming water enters the inlet valve 11, flows along the cylindrical conduit formed by the portions 27,29 and enters the chamber 19 of the dirt separator 18, which owing to the element 19A separates the impurities in the water that are gathered in the chamber 20 below. From the dirt separator 18 the water then exits through the annular continuous conduit formed by the portions 28 and 30, flows along the cylindrical conduit 33 and then traverses he filtering device 36, passing through the hole 38, flowing along the conduit portion 43 and traversing the filtering mesh 39 where it undergoes filtration proper. The water that is thus purified and filtered exits the outlet valve 13 to reach the boiler and the heat exchanger thereof.

There is the advantage that at the act of loading the plant with water the filtering device 36 in particular retains the dirt, preventing it going into circulation in the plant. There is also the advantage of complete cleaning of the plant at the first return of water to the boiler. During normal operation of the plant the combination of the dirt separator 18 and of the filtering device 36 retains all the impurities and dirt. In the dirt separator 18 the particles of dirt and impurities collide with the element with reticular surfaces 19A in the chamber 19 and gather through gravity in the decanting chamber 20; the magnetic ring 21 of the dirt separator retains in the decanting chamber 20 the ferrous impurities due, for example, to the corrosion of the pipes. The fact of having a dirt separator before the filtering device increases the number of flows of the water in the closed circuit before the filtering device can get clogged, thus reducing maintenance.

By unscrewing one of the two caps 37 it is possible to clean or replace the filtering device 36. Equally, by removing the cap 23 and opening the valve 22 it is possible to purge the dirt separator 18.

During loading of the plant, a close-meshed filtering device can be used whereas during normal operation of the plant a wide-meshed filtering device can be used to avoid load losses.

The tank 40 of the filtering device 36 enables the dirt retained by the filtering mesh 39 to be collected therein. The conduit portion 43 enables the water to be conveyed to the filtering mesh 39 without turbulence so that the retained dirt falls correctly into the tank 40, also minimising load losses.

Owing to the presence of the two caps 37, the filtering device 36 is extractable from both sides of the sleeve 34.

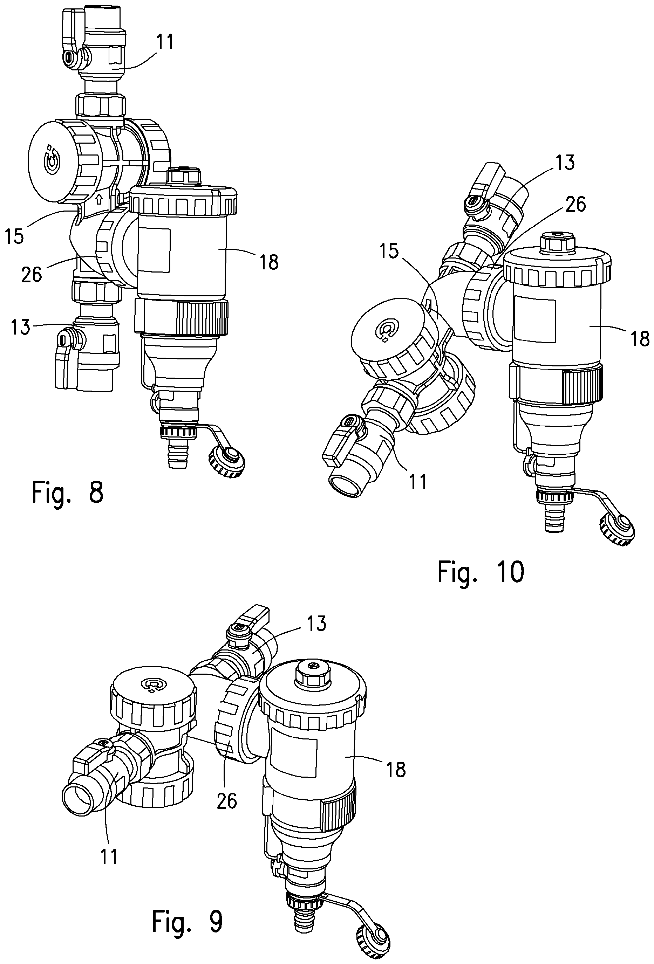

The coupling between the pipe union 15 and the dirt separator 18 by means of the toothed edges 31 and 32 enables the dirt separator 18 to be variously oriented with respect to the pipe union 15, as shown in figs 8,9,10: in fig.8 the dirt separator 18 is rotated by 180° with respect to the pipe union 15, in fig. 9 by 90°, and in fig. 10 by an intermediate angle between 90° and 180°.

The extractability of the filtering device 36 from both sides and the orientability of the dirt separator 18 confer great flexibility of application and ease of maintenance on the valve unit 10.

The configuration of the filtering device 36 does not allow the dirt to fall back into the plant during the step of extracting the device, regardless of the position and of the orientation of the device in the seat 35 of the sleeve 34.

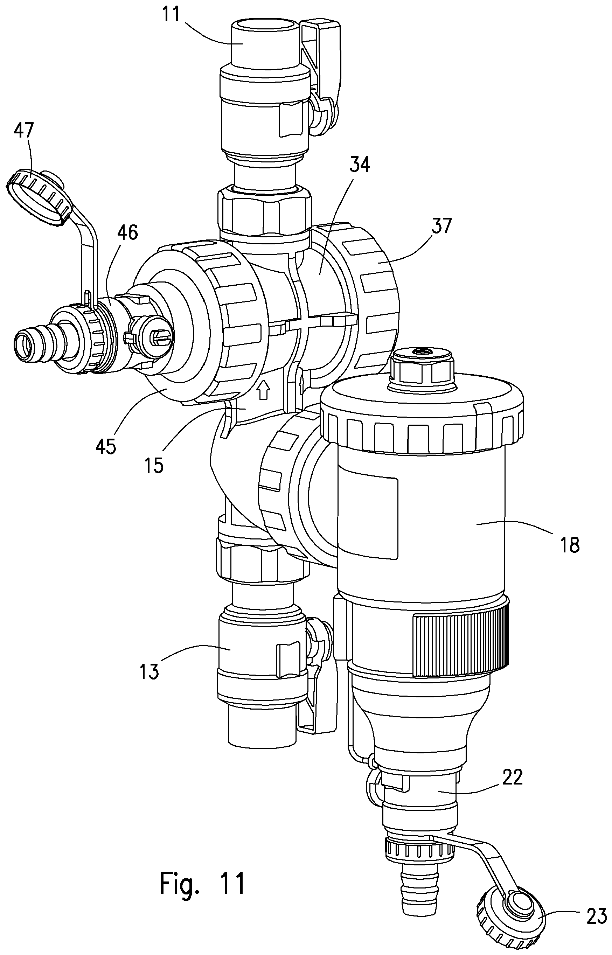

In fig. 11, instead of one of the two caps 37 an accessory is used consisting of a cap 45 provided with a loading/unloading tap 46 with a closing cap 47, similarly to the tap 22 of the dirt separator 18. When the valve unit 10 is fitted in the plant, through the tap 46 it is possible to fill the plant from a different water source from the mains water supply or add an additive to the water in the circuit of the plant. Further, through the tap 22 of the dirt separator 18 and the aforesaid tap 46 of the accessory it is possible to wash the valve unit 10, possibly by removing the deviation element 19A and the filtering device 36.

It is clear that variations on and/or additions to what has been disclosed and illustrated above can be provided.

In particular, the type and configuration of the various components can vary, even if the configuration of the filtering device reveals itself to be particularly effective.

The valve unit disclosed can be applied with the same methods also the plants for cooling rooms.

## Claims

1. Valve unit (10) in particular for thermal plants for regulating the internal temperature of environments, intended for being mounted in a circuit of the thermal plant in which a thermal fluid flows, comprising an inlet fitting (11) and an outlet fitting (13) of the thermal fluid and a pipe union (15) that joins the two fittings (11,13), a magnetic dirt separator (18) and a mechanical removable filtering device (36) arranged along said pipe union,
**characterised in that** the pipe union (15) is T-shaped, the dirt separator (18) is connected to the end of the stem of the T of the pipe union (15) and is provided with an inlet/outlet mouth connected to a portion (25) of the pipe union (15) by a threaded fixing ring nut (26) and the filtering device (36) is provided along the wings of the T inside the pipe union, and wherein the dirt separator (18) is arranged upstream of the filtering device and is orientable with respect to the pipe union (15) and the filtering device (36) is removable.

2. Valve unit according to claim 1, wherein the filtering device (36) comprises two elements (37A,40), a first hollow element (37A) with an inlet hole (38) for the fluid and a filtering mesh (39), and a second receptacle element (40), inserted into the first hollow element (37A) to collect the particles retained by the filtering mesh (39).

3. Valve unit according to claim 2, wherein the inlet hole (38) and the filtering mesh (39) of the hollow element (37A) are opposite and in which the receptacle element (40) has a through conduit portion (43) aligned with the inlet hole (38) of the hollow element (37A).

4. Valve unit according to any preceding claim, wherein the filtering device (36) is received in a seat (35) of the pipe union (15) provided with several openings closed by removable closing means (37) for removing the filtering device (36) through any of said openings.

5. Valve unit according to claim 4, wherein alternatively to at least one of said removable closing means (37) valve means is provided (46) for the entry of fluid into the valve unit or the exit of fluid from the valve unit.

6. Valve unit according to any preceding claims, wherein the pipe union (15) and the dirt separator (18) have respective portions (24,25) fitted with toothed reciprocal coupling means (31,32) and reciprocal fixing means (26) that is releasable for orienting the dirt separator (18) with respect to the pipe union (15) in a preset position and for fixing it in a releasable manner in said position.

## Patentansprüche

1. Ventil (10) insbesondere für Heizungsanlagen zur Regelung der Innentemperatur von Umgebungen, das dazu bestimmt ist, in einem Kreislauf der Heizungsanlage, in dem ein Wärmeträger strömt, angeordnet zu werden, umfassend einen Einlassanschluss (11) und einen Auslassanschluss (13) des Wärmeträgers und eine Rohrverbindung (15), die die beiden Anschlüsse (11, 13) verbindet, einen magnetischen Schmutzabscheider (18) und eine mechanisch entfernbare Filtervorrichtung (36), die entlang der Rohrverbindung angeordnet ist, **dadurch gekennzeichnet, dass** die Rohrverbindung (15) T-förmig ist, der Schmutzabscheider (18) mit dem Ende des Schaftes des T des Rohrverbinders (15) verbunden ist und mit einer Einlass-/Auslassmündung versehen ist, die mit einem Abschnitt (25) der Rohrverbindung (15) durch eine Befestigungsmutter mit Gewinde (26) verbunden ist und die Filtervorrichtung (36) entlang der Flügel des T innerhalb der Rohrverbindung vorgesehen ist, und wobei der Schmutzabscheider (18) stromaufwärts der Filtervorrichtung angeordnet und in Bezug auf die Rohrverbindung (15) ausrichtbar und die Filtervorrichtung (36) entfernbar ist.

2. Ventil nach Anspruch 1, wobei die Filtervorrichtung (36) zwei Elemente (37A, 40) umfasst, ein erstes Hohlelement (37A) mit einer Einlassöffnung (38) für den Träger und ein Filternetz (39) und ein zweites Aufnahmeelement (40), das in das erste Hohlelement (37A) eingesetzt ist, um die von dem Filtergitter (39) zurückgehaltenen Partikel zu sammeln.

3. Ventil nach Anspruch 2, wobei das Einlassloch (38) und das Filternetz (39) des Hohlelements (37A) entgegengesetzt sind und in dem das Aufnahmeelement (40) einen durchgehenden Leitungsabschnitt (43) aufweist, der auf das Einlassloch (38) des Hohlelements (37A) ausgerichtet ist.

4. Ventil nach einem der vorstehenden Ansprüche, wobei die Filtervorrichtung (36) in einem Sitz (35) der Rohrverbindung (15) aufgenommen ist, der mit mehreren Öffnungen versehen ist, die durch entfernbare Verschlussmittel (37) zur Entfernung der Filtervorrichtung (36) durch irgendeine der Öffnungen verschlossen sind.

5. Ventil nach Anspruch 4, wobei alternativ zu wenigstens einem der entfernbaren Schließmittel (37) Ventilmittel (46) für den Eintritt des Trägers in das Ventil oder den Austritt des Trägers aus dem Ventil vorgesehen sind.

6. Ventil nach einem der vorstehenden Ansprüche, wobei die Rohrverbindung (15) und der Schmutzabscheider (18) entsprechende Abschnitte (24, 25) aufweisen, die mit gezahnten reziproken Kupplungsmitteln (31, 32) und reziproken Befestigungsmitteln (26) versehen sind, die lösbar sind, um den Schmutzabscheider (18) in Bezug auf die Rohrverbindung (15) in einer voreingestellten Position auszurichten und in dieser Position lösbar zu befestigen.

## Revendications

1. Unité de soupape (10) destinée en particulier aux installations thermiques pour réguler la température interne d'environnements, prévue pour être montée dans un circuit de l'installation thermique dans lequel circule un fluide thermique, comprenant un accessoire d'entrée (11) et un accessoire de sortie (13) du fluide thermique et un raccord de tuyauterie (15) qui réunit les deux accessoires (11, 13), un séparateur de saletés magnétique (18) et un dispositif de filtration amovible mécanique (36) agencé le long dudit raccord de tuyauterie,
**caractérisée en ce que** le raccord de tuyauterie (15) est en forme de T, le séparateur de saletés (18) est relié à l'extrémité de la tige du T du raccord de tuyauterie (15) et est doté d'une bouche d'entrée/de sortie reliée à une partie (25) du raccord de tuyauterie (15) par un écrou de fixation fileté à oeillet (26) et le dispositif de filtration (36) est prévu le long des ailes du T à l'intérieur du raccord de tuyauterie, et dans laquelle le séparateur de saletés (18) est agencé en amont du dispositif de filtration et peut être orienté par rapport au raccord de tuyauterie (15) et le dispositif de filtration (36) est amovible.

2. Unité de soupape selon la revendication 1, dans laquelle le dispositif de filtration (36) comprend deux éléments (37A, 40), un premier élément creux (37A) doté d'un orifice d'entrée (38) pour le fluide et d'un tamis de filtration (39), et un second élément formant réceptacle (40), inséré dans le premier élément creux (37A) pour collecter les particules retenues par le tamis de filtration (39).

3. Unité de soupape selon la revendication 2, dans laquelle l'orifice d'entrée (38) et le tamis de filtration (39) de l'élément creux (37A) sont opposés et dans laquelle l'élément formant réceptacle (40) possède une partie formant conduit traversant (43) alignée sur l'orifice d'entrée (38) de l'élément creux (37A).

4. Unité de soupape selon une quelconque revendication précédente, dans laquelle le dispositif de filtration (36) est reçu dans un siège (35) du raccord de tuyauterie (15) doté de plusieurs ouvertures fermées par des moyens de fermeture amovibles (37) pour le retrait du dispositif de filtration (36) à travers l'une quelconque desdites ouvertures.

5. Unité de soupape selon la revendication 4, dans laquelle en variante à au moins un desdits moyens de fermeture amovibles (37), il est prévu un moyen de soupape (46) pour l'entrée de fluide dans l'unité de soupape ou la sortie de fluide de l'unité de soupape.

6. Unité de soupape selon l'une quelconque des revendications précédentes, dans laquelle le raccord de tuyauterie (15) et le séparateur de saletés (18) ont des parties (24, 25) respectives dotées de moyens d'accouplement réciproques dentés (31, 32) et d'un moyen de fixation réciproques (26) qui est amovible pour orienter le séparateur de saletés (18) par rapport au raccord de tuyauterie (15) dans une position prédéfinie et pour le fixer de manière amovible dans ladite position.
